# EUROPEAN PATENT APPLICATION

(11) **EP 1 262 866 A1**
(43) Date of publication of application: **04.12.2002**
(21) Application number: 01304837.6
(22) Date of filing: 01.06.2001
(51) Int. Cl.: G06F 7/02, H04N 7/26

(54) **A method and circuitry for determining the validity of information**

(71) Applicant: STMicroelectronics, Ltd., Almondsbury, Bristol, BS32 4SQ (GB)
(72) Inventor: Cordero, Rodrigo, Eastville, Bristol BS5 6RH (GB)
(74) Representative: Style, Kelda Camilla Karen

(57) **Abstract**

A method which determines the validity of information contained in a data stream, said information falling within a predetermined range when valid, said method comprises the steps of selecting a first part of said of said information, said first part being more significant than a remainder of said information; comparing said first part with one or more corresponding parts of one or more values defining said predetermined range. Determining from said comparing step if said information is or could be within said predetermined range.

## Description

The present invention relates to a method of and circuitry for determining the validity of information contained in a data stream. The invention relates particularly but not exclusively to the determination of the validity of a time stamp in a digital set top box of a digital television receiver.

In digital television systems, the television is provided with a set top box to receive and decode a broadcast digital data stream which contains program information for display on the television. The broadcast digital data stream may arise at the set top box via a satellite or cable system, via a digital terrestrial system, or via disk or tape. A disk or tape, such as a CD ROM in a personal computer, may provide digital video information for display on the monitor.

There are various known standards for digital video broadcasting (DVB) and one now commonly used standard is the MPEG-2 standard.

In the MPEG-2 DVB standard, data is encoded into transport packets. Each transport packet is defined by the standard as consisting of 188 bytes, comprising four header bytes and 184 payload bytes ("the data payload"). For transmission, the transport packets are time division multiplexed into a transport stream. At the receiver in the set top box, the transport stream is demultiplexed to recover the transport packets. Optionally, the transport packets may be scrambled and encoded with error correction information for transmission and then descrambled and error checked at the receiver. The data payload in the transport packets is, according to the MPEG-2 standard, one of two types. The first type is known is a packetised elementary stream (PES), and the second type is known as program specific information (PSI).

The packetised elementary streams (PESs) form the video, audio and private. data information of the broadcast. A PES packet may contain all sorts of data. audio or video and also other information such as teletext or other user defined general data. The MPEG-2 transport stream is made up of one or more PESs (either video, audio or private). The MPEG-2 transport stream is primarily intended for the transport of TV programs over long distances. This type of stream can combine, in the same multiplex, many programs, each of them being composed of one or more PESs. In order that the receiver can cope with this mix of program information, the MPEG-2 standard defines all types of tables, which together make up the MPEG-2 program specific information (PSI).

At each decoder or set top box, the transport stream is decoded. To achieve the decoding of the transport stream, each set top box is provided with a transport interface, which provides an input interface between the transport stream input to the box and the actual MPEG-2 decoders which decode the audio and video information and sections broadcast. The transport interface demultiplexes the transport stream to retain only those transport packets, which are required by the particular set top box for decoding. The transport stream is a set of different services time division multiplexed and the purpose of the transport interface is to demultiplex them. At a front input end of the transport interface, a time demultiplex function is performed to separate the transport stream into its component transport packets.

Each transport packet has associated therewith in its header a packet identifier (PID) which identifies the type of packet and various information associated with the data in the packets including the type of packet (PES or PSI). Each particular receiver or set top box is only interested in receiving packets having packet identifiers of interest to the particular set top box, for instance those associated with the particular television program selected for viewing. Thus, once the incoming transport stream has been time demultiplexed to recover the transport packets, it is necessary to further demultiplex the transport packets to retain only those having packet identifiers required by the receiver.

The transport interface merely uses the header of PES transport packets to demultiplex them, and stores the data payload of the demultiplexed packets in the memory. The transport interface similarly demultiplexes PSI transport packets but then filters the sections of the demultiplexed packets to retain only sections required by the receiver, before storing the filtered sections in the memory without further processing.

The MPEG data streams contain a time stamp. The time stamp is contained in the private part of the header.

There may be a local clock, a reference clock in the transport stream and a presentation display time stamp on the PES. The time stamps are used to synchronise the different pieces of the stream along the resources such as frames, sound or the like. The use of the time stamp varies from service provider to service provider. This allows the stream to be filtered to extract just a piece of audio or video data.

Although the MPEG-2 DVB standard is one of the main digital video broadcast standards, there are variations within the standard. This means that the format of the time stamp as well as the size of the time stamp can be varied.

It has been proposed to check the time stamp using software. However, providing a suitable program which is able to cope with differences in the size and format of the time stamp has the disadvantage in that the check can be very time consuming. An alternative which has been proposed is to use a hardware solution in order to check the time stamp. This requires a full comparator which takes into account the maximum size of the stamp. Providing a full comparator with all its associated connections is disadvantageous in that a relatively large area of silicon is required.

Accordingly, it is an aim of embodiments of the present invention to provide a method and circuitry which is able to check a time stamp in a data stream without the disadvantages of the above described proposals.

According to one aspect of the present invention there is provided a method of determining the validity of information contained in a data stream, said information falling within a predetermined range when valid, said method comprises the steps of selecting a first part of said of said information, said first part being more significant than a remainder of said information; comparing said first part with one or more corresponding parts of one or more values defining said predetermined range; and determining from said comparing step if said information is or could be within said predetermined range.

According to a second aspect of the present invention there is provided circuitry for determining the validity of information contained in a data stream, said information falling within a predetermined range when valid, said circuitry comprises means for selecting a first part of said of said information, said first part being more significant than a remainder of said information; means for comparing said first part with one or more corresponding parts of one or more values defining said predetermined range; and means for determining from said comparing step if said information is or could be within said predetermined range.

For a better understanding of the present invention and as to how the same may be carried into effect, reference will now be made by way of example to the accompanying drawings in which:-
Figure 1 illustrates a portion of a transport stream;
Figure 2 illustrates in block schematic form a programmable transport interface;
Figure 3 illustrates the search engine of Figure 2 in more detail;
Figure 4a illustrates the control flow of the arrangement shown in Figure 3;
Figure 4b illustrates schematically a comparison carried out between the time stamp received and one limit of a range; and
Figure 5 illustrates a digital broadcast system incorporating a programmable transport interface embodying the present invention.

In the following description the present invention is described with reference to an exemplary embodiment in which an MPEG-2 transport stream is demultiplexed in a programmable transport interface of a receiver in a digital set top box. It will be apparent, however, that the present invention is not limited to such an application and does in fact have broader applicability to other types of digital data and other types of application.

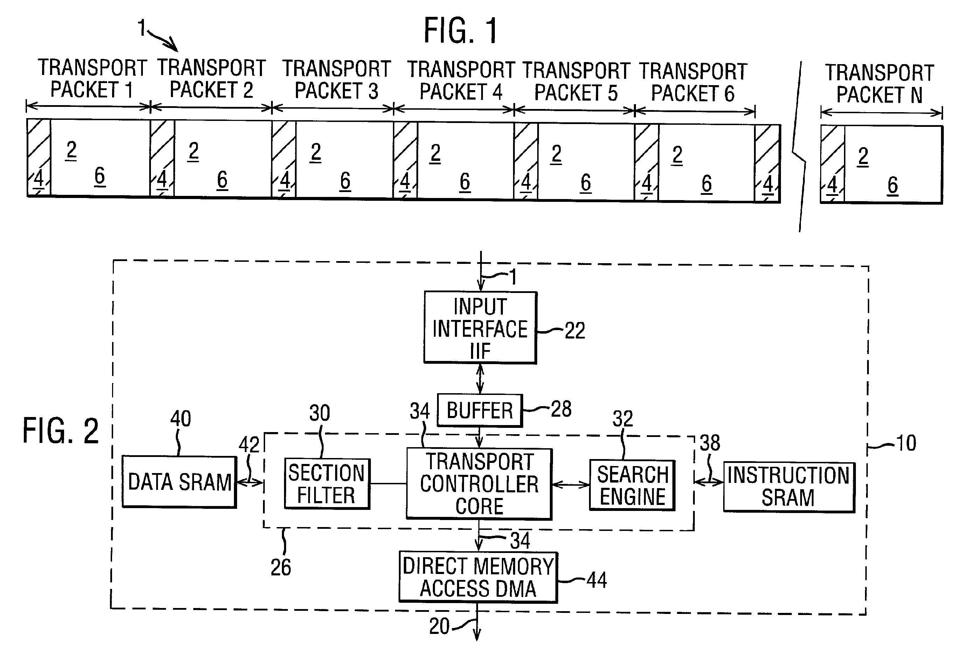

Figure 1 illustrates a portion of a transport stream 1 which is composed of a series of n transport packets 2. Each transport packet 2 comprises a transport packet header 4 and a transport packet payload 6. The transport stream is a bit stream which carries in the transport packet payloads 6 information for recreating, for example, a number of different television programs.

The transport stream is formed by source encoding the television programs. The transport stream is then typically channel encoded for transmission (by satellite or cable) and channel decoded on its reception to reproduce the transport stream. The transport stream is then source decoded to recreate a selected one of the different television programs. Each particular television program requires three types of information (audio information, video information and tables of program information) for its recreation. Each transport packet 2 is preferably associated with a particular television program, a particular source encoding time and a particular one of the information types. The individual transport packets are time division multiplexed to form the transport stream and allow the real-time recreation of any one of the different television programs from the transport stream. To recreate a television program the transport stream is sequentially demultiplexed to recover only the transport payloads 6 of audio information, video information and tables of program information which are associated with the selected television program. The recovered payloads are then decoded and used to recreate the television program.

According to the MPEG-2 digital video broadcast (DVB) standard, each of the transport packets 2 is 188 bytes long and the transport packet header 4 is four bytes long. The transport packet payload 6 contains either audio or video information or sections. The sections are parts of tables. The audio and video information and the sections in the payloads 6 are packetised and encoded in accordance with MPEG-2 DVB compression standard.

The time stamp can be included in any part of the packet. For example the time stamp may be contained in the private part of the header, any other part of the header or in the payload. There may be one or more time stamps such as a local clock, a reference clock or a presentation display time stamp. The time stamps may be in the same or different parts of the packet. The clocks can be used to synchronize the different pieces of stream along the resources. The applications of and the number of clocks may vary from service provider to service provider. Some service providers may want to filter the stream to extract just a piece of sound or a piece of video.

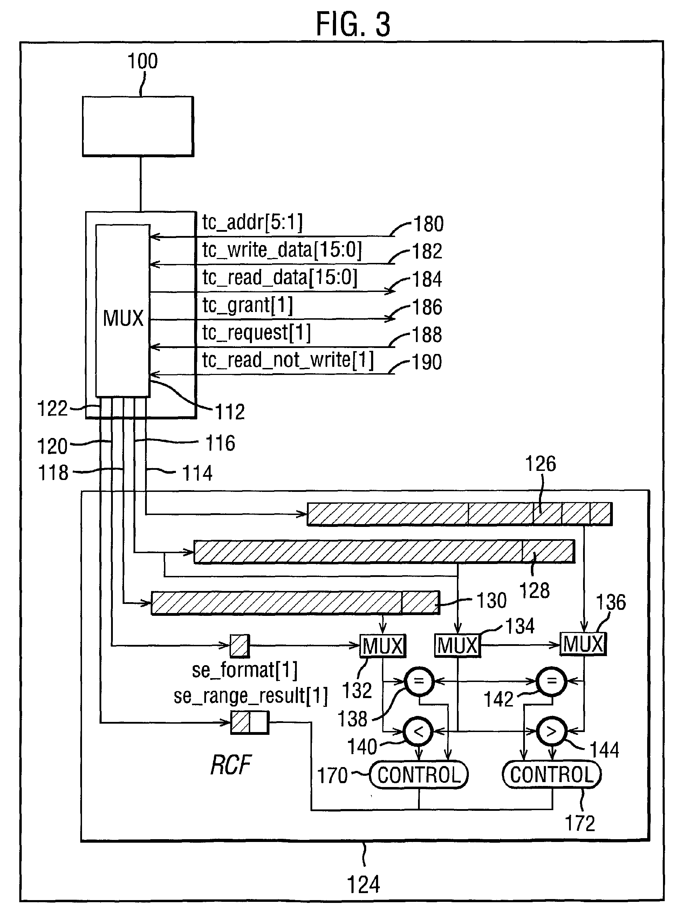

A programmable transport interface 10, shown in Figure 2, is used to process a transport stream 1 and produce a data output stream suitable for reconstitution as a television program after MPEG-2 decoding by MPEG-2 decoders (not shown). The programmable transport interface 10 is included in a receiver which receives the transport stream 1.

The transport packet header contains a synchronisation byte which identifies the beginning of each transport packet 2. The transport packet header also contains a packet identifier (PID) which identifies the information type and the television program associated with the transport packet payload 6. The transport packet 2 also contains information identifying the source encoding time of the transport packet. The transport packet header 4, including the synchronisation byte and the PID, is not scrambled. The transport packet payloads 6 may be scrambled.

The programmable transport interface (PTI) 10 performs various functions including:-
1. Using the synchronisation byte to identify the start of the transport packet 2;
2. Using the packet identification (PID) to identify, amongst other functions, the type of information contained in the packet (i.e. audio or video information or sections) and the television program it represents;
3. Descrambling the transport packet payload 6; and
4. Demultiplexing the transport stream 1 to produce a data output stream 20.

The data output stream 20 comprises a stream of audio information associated with the selected television program, a stream of video information associated with the selected television program or tables of program information associated with the selected television program. The PTI outputs the streams to the necessary MPEG-2 decoder to reproduce the selected television program.

The programmable transport interface 10 comprises an input interface. The input interface 22 receives the transport stream 1. The input interface 22 identifies the synchronisation byte of each transport packet which is used to synchronise the system clock and the transport stream. The input interface 22 is controlled by the transport core 24 of a transport controller 26 via input interface control signals from the transport controller core to the input interface. The control signals may include a descrambling control signal and output stream control signals.

The input interface 22 provides bits to the transport controller 26 via a buffer 28. The buffer 28 is used to temporarily store data from the input interface, when required. The input interface 22, under the control of the transport controller core 24 descrambles the payload 6 of selected transport packets and supplies selected descrambled payloads to the transport controller 26.

The transport controller 26 comprises a section filter 30 and search engine 32 in addition to the transport controller core 24. The transport controller 26 operates on the bits received from the input interface 22. In particular, the transport controller 26 receives from the input interface 22 the transport packet header 4 of the transport packet 2 arriving at the input interface 22. The transport controller 26 uses the packet identifier in the transport packet header 4 to determine whether the transport packet 2 now entering the input interface is associated with the selected television program for the programmable transport interface 10. If it is not, the received transport packet 2 is discarded. If it is, it controls the input interface 22 to descramble, if necessary, the transport packet payload as described above, and to supply the transport packet payload 6 to the transport controller 26.

The transport controller 26 may pass a payload 6 associated with the audio or video information for the selected program straight to the transport controller output 34. If the payload relates to a section of a table the transport controller may further process the information before providing it at its output 34.

The transport controller core 24 of the transport controller 26 reads instruction sets from an instruction SRAM 36. The transport controller 26 is connected to the SRAM 36 by interconnect 38 and it reads its instructions via that interconnect. A system processor (not shown) may read and write to the instruction SRAM 36. However, the transport controller 26 has preferential access to the instruction SRAM 36 determined by an arbiter (not shown) which arbitrates between accesses by the transport controller 26 and the system processor.

The PTI 10 also comprises a data SRAM 40 which again can be accessed by the transport controller core 24. In particular, data is written to and read from the data SRAM 40 via interconnect 42. The search engine 32 is in the transport controller 26 is also able to read data from the data SRAM 40. The search engine 32 searches the data SRAM 40 for the packet identifiers in the incoming transport packet header 4. If the packet is not to be discarded, then the PID for that packet will have been stored in the data SRAM and is located by the search engine 32 of the transport controller 24. Associated with each packet identifier in the data SRAM 40 is a plurality of pointers, which point to other addresses in the data SRAM where other information associated with the incoming transport is stored. This may include the stamp information. The time stamp information can be stored, passed straight through or not even used at this level.

The search engine retrieves the pointer stored with a particular packet identifier but used by the transport controller core 24. The transport controller core 24 then uses the pointers to access all the information it needs to process the payload of the incoming transport packet. The pointers may, for example, point to descrambling keys for use by the input interface 22, point to addresses for use by a direct memory access controller 44, identify whether the payload is video or audio information or sections, or identify whether the payload is special data to be output on an alternative output etc. Thus, the information obtained from the data SRAM 40 enables the transport controller to control the PTI 10.

The transport controller 26 produces the transport controller output 3 which is supplied to a multi channel direct memory access controller 44. The multi channel direct memory access controller 44 supplies the data output stream 20, indirectly, to the MPEG decoders (not shown).

The search engine 32 is arranged to check that a time stamp contained in a selected packet of the transport stream 1 falls within a given range. The search engine 32 obtains both the time stamp information itself and the desired range from the transport controller core 24. The information on the range and/or the format on the time stamp and/or range is preferably obtained from the top level application. thus, the user or the service provider may provide this information through the stream.

Reference will now be made to Figure 3 which shows the search engine 32 in more detail. The search engine 32 comprises a microprocessor 100, a range checker functionality 124 and a multiplexer 112.

The range checker functionality 124 receives on its first input 114 data which defines the maximum value of the time stamp of the received program may have. This data is stored in the first register 126. On the second input 116, the range checker functionality 124 receives the time stamp information which is extracted from the received program. This received time stamp information is stored in the second register 128. On the third input 118, the range checker functionality 124 receives the minimum value that the time stamp in the received program may have. This data is stored in a third register 130. The fourth input from the multiplexer 112 provides a search engine format signal which controls first to third multiplexers 132 to 136 of the range checker functionality 124.

The first multiplexer 132 is connected to receive an input from the third register 130, the second multiplexer 134 is arranged to receive an input from the second register 128 and the third multiplexer 136 is arranged to receive an input from the first register 126. The multiplexers 132-136 are arranged to receive one byte at a time from the respective first to third registers 126-130 starting with the most significant byte contained in each register. The signal received on the fourth input 120 from the multiplexer 112 effectively acts as a clocking signal for each of the multiplexers 132, 134 and 136 of the ranger checker functionality.

The first multiplexer 132 has an output connected to a first comparator 138 and to a second comparator 140. The first comparator 138 also receives an input from the second multiplexer 134. The third multiplexer 136 has an output connected to third and fourth comparators 142 and 144. The third and fourth comparators 142 and 144 also receive an input from the second multiplexer 134.

The first comparator 138 is arranged to compare the byte received from the third register 130 with the byte received from the second register 128. In particular, the first comparator 138 is arranged to determine if the values of the two bytes are the same. This effectively checks to see if the two bytes have the same value.

The second comparator 140 is arranged to check to see whether or not the byte received from the second register 128 is greater than the byte received from the third register 130.

Each of the first and second comparators 138 and 140 is arranged to provide an output to control circuitry 170. The control circuitry 170 uses the output from the comparators to make a determination as to whether or not the time stamp is or could be within the defined range.

The third comparator 142 is arranged to compare the byte from the second register 128 with the byte from the first register 126. In particular, the third comparator 142 is arranged to see if the two bytes have the same value.

The fourth comparator 144 compares bytes from the second register 128 with bytes from the first register 126. In particular, it checks to see if the byte from the second register is smaller than the byte from the first register 126.

The outputs of the third and fourth comparators 142 and 144 are output to control circuitry 172 which again is able to provide a signal if the time stamp is or could be within the defined range. The output of the two control circuits 170 and 172 provide output 122 of the range checker functionality 124 which is input to the multiplexer 112. This information output from the range checker functionality is used by the microprocessor. The time stamp allows part of the stream to be identified. The identified part of the stream may be altered, selected etc.

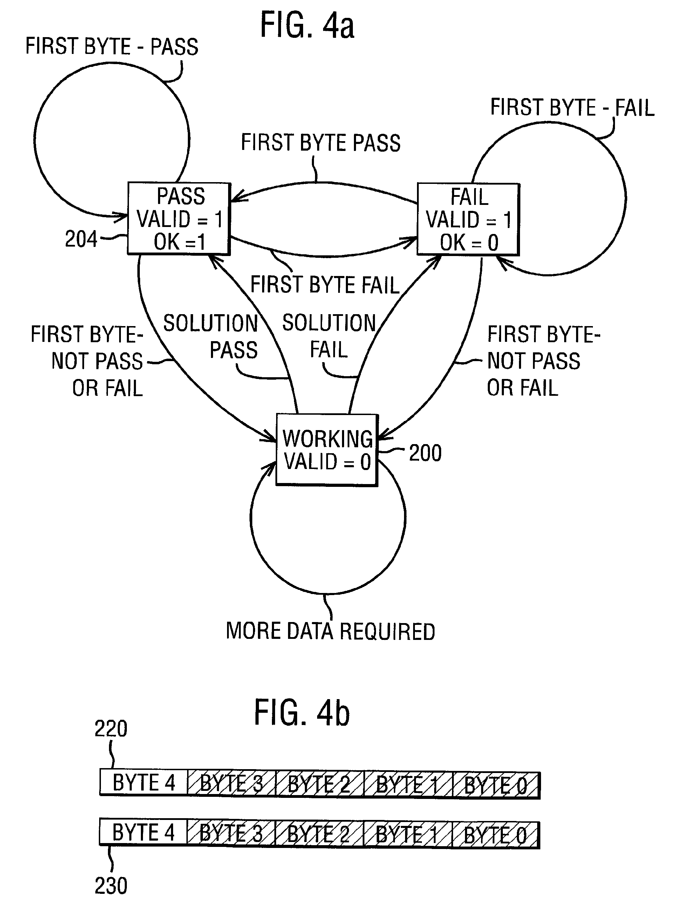

Reference is made to Figure 4 which shows a control flow chart for the range checker function of Figure 3. In particular, the flow chart of Figure 4 illustrates the control in one of the control branches of the range checker functionality. One branch consists of the control circuitry 170 and associated comparators 138 and 140 whilst the other control branch comprises the control circuitry 172 and associated comparators 142 and 144. For the purposes of the following explanation, the function provided by the control circuitry 170 and the comparators 138 and 140 will be described. In other words, a check will be made to see whether or not the defined value is below the maximum defined for the range.

The most significant byte of the received value is compared with the most significant value defining the bottom of the range. The first comparator 138 will determine whether or not the bytes equal. If the bytes are equal, then a determination is made in the control circuitry 170 that the received time stamp value might be above the value defined for the lower side of the range and accordingly it is determined that more data is needed to check whether or not the time stamp is within the defined range. This corresponds to the working state 200. At the same time, the second comparator 140 determines whether or not the time stamp byte is greater than the corresponding byte from defining the lower end of the range. If it is determined that the value of the time stamp is less than the value for the bottom of the range, it is determined that the time stamp does not fall within the required range and this corresponds to state 202 of Figure 4. Figure 4 effectively represents the processes performed by control circuitry 170. The state defined by 202 is where the byte considered is less than the minimum value defined by the bottom of the range 202 and accordingly it can be determined that the time stamp will fall outside the required range. If, on the other hand, it is determined that the byte from the time stamp is greater than the corresponding byte defining the minimum value of the bottom of the range then state 204 is achieved. In this, it is thus determined that the time stamp is within defined range and no further checks need to be carried out. The situation can be summarised as follows:-

The time stamp is within the defined range if the first comparator 138 provides an indication that the byte from the time stamp is not equal to the byte defining the minimum value of the range and the second comparator 140 indicates that the byte from the time stamp is greater than the corresponding byte defining the lower end of the range. If the first comparator 138 determines that the byte from the time stamp is not equal to the corresponding byte from the value defining the lower end of the range and the second comparator 140 determines that the value of the byte from the time stamp is less than the corresponding byte from the minimum value, then an immediate determination can be made that the time stamp falls below the minimum defined range and that the time stamp is not valid. Finally, if it is determined by the first comparator 138 that the byte from the time stamp is equal to the byte from the minimum value, then it can be determined that the time stamp might, but not necessarily, fall within this range and accordingly further checks would need to be made. In that case, the next most significant byte of the time stamp would be compared with the corresponding byte from the value defining the lower end of the range.

In the notation shown in Figure 4, there are two conditions which are defined - Valid and OK. Valid has the value 1 when a determination has been made as to whether or not the time stamp is within the defined range. In particular, the valid bit has the value 1 if the determination has been made that the time stamp is definitely above the minimum range or definitely below the minimum value. Where further data is required, then the valid bit has the value 0. Of course the values associated with the two states can be swapped over. The second state is only applicable when the valid bit has the value 1. OK will have the value 1 and indicates that the time stamp as a whole is above the range. The value 0 is used when it is determined that the time stamp as a whole falls below the minimum value of the range. The value of the OK bit is unimportant when the valid bit is 0. For each subsequent byte bar the last one, if the control circuitry is in the working state, a determination is made, in the same way as outlined previously, as to whether or not there is a pass condition, a fail condition or whether further data is required. It should be appreciated that in preferred embodiments of the present invention, further checks only need to be carried out if the results of the comparison of the previous bytes has resulted in the maintenance of the working state.

If the final byte of the time stamp and the registers are required, then there can only be two conditions with respect to that final byte, that is the pass or fail condition. The working condition is no longer possible as there is no further data.

A similar check is performed using the third and fourth comparators 142 and 144 and the associated control circuitry 172 in order to determine whether or not the time stamp is less than or equal to the defined maximum value. The two control circuits 170 and 172 thus provide a joint output comprising four bits, a valid and OK bit for the first control circuitry 170 and a valid and OK bit for the second control circuitry 172. For the time stamp to be within the defined range, the valid bits must both be 1 and the OK bits both 1. If either of the valid bits is 0 then it is clear that further checks need to be made in order to determine if the time stamp is within the range. If either of the OK bits is 0, then it can be determined that the time stamp is outside the defined range.

Reference is made to Figure 4b which shows a first value 220 representing a time stamp and a second value 230 representing the minimum value. In the first step of the comparison, byte 4 of the time stamp is compared with byte 4 of the minimum value. This can be done in a number of different ways. Firstly, the remaining bytes of each of the two values may be masked out. Alternatively, the value of byte 4 can be taken out and compared. As will be appreciated the first byte, byte 4 represents the most significant bits of the value. If further checks need to be carried out, then the next most significant byte will be checked and so on. It is important to note that corresponding bytes of the time stamp and the minimum value are compared. It should be appreciated that the above description applies equally to the determination of the maximum value. However, in that case, it will be checked to see that the respective byte of the time stamp is less than the corresponding byte defining the maximum value.

Embodiments of the present invention thus have the advantage in that the method of checking the time stamp is fully flexible. As the checks are made byte by byte, the logic required is very much less than in the prior art where the whole of the date stamp is compared with a maximum or minimum value. As the check is done byte by byte, it is not necessary for the data to be stored other than in the register. The method of the present invention can be much quicker than with the prior art. This is because of embodiments of the present invention it is not necessary always to check the entire time stamp.

Embodiments of the present invention also have the advantage that the checks can be made independent of the format and the size of the time stamp. This is because the checks are done byte by byte. The registers therefore only need to store a part of the time stamp and range at a time. The further bytes can be put into the register once the more significant bytes have been checked. The format can be designed to be resolved in software by reordering of the ranges or in hardware by the programmable multiplexing of the bytes or the range. Additionally, embodiments of the invention make use of silicon space efficiently. In other words, the amount of silicon required is less than for the known alternatives.

The multiplexer 112 also receives a transport controller address 180 , a transport controller write data input 182 a transport controller request 188 and a transport controller read not write signal via input 190. The multiplexer 112 also provides a transport controller read data signal via output 184 and a transport controller grant signal 186. This is generally in response to the transport controller request signal 188.

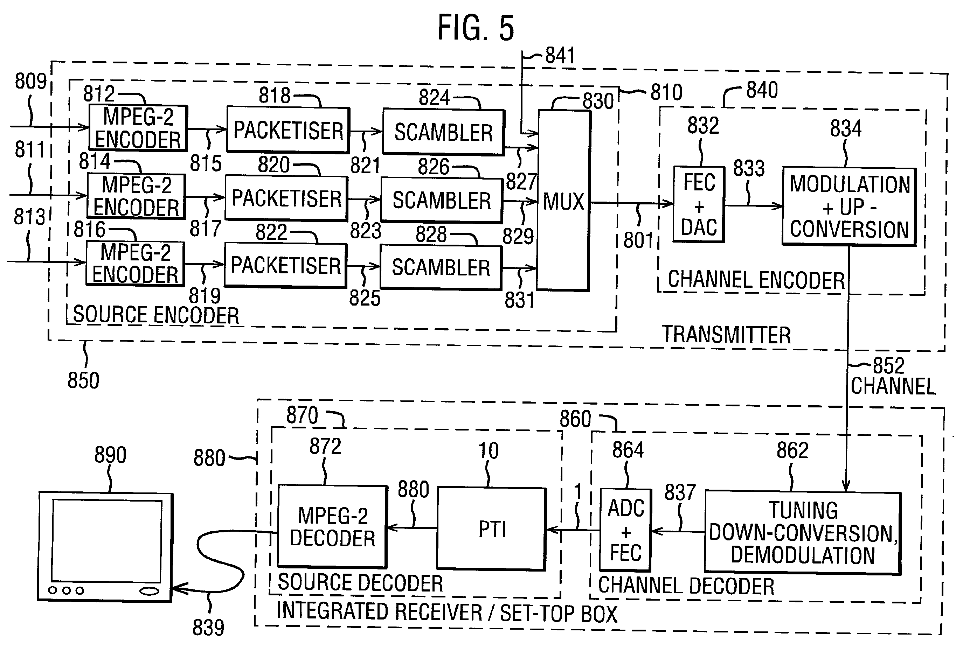

Figure 5 illustrates how digital television signals 809, 811 and 813 can be transmitted via a cable, satellite or terrestrial television channel 852 and be viewed on a television 890. The first, second and third television signals 809, 811 and 813 each represent the audio and video signals necessary to recreate a television program for input to a television. The digital television signals 809, 811 and 813 are source encoded and channel encoded by a transmitter 850 to produce a modulated analogue signal for transmission on the channel 852. An integrated receiver decoder (also known as a set top box 880) receives the modulated analogue signal from the channel 852 and produces a video signal 839 which operates the television 890.

The operation of the transmitter 850 will now be explained. The transmitter includes a source encoder 810 and a channel encoder 840. the source encoder includes first, second and third MPEG 2 encoders 812, 814 and 816, first, second and third packetisers 818, 820 and 822, first, second and third scramblers 824, 826 and 828 and a multiplexer 830. The transmitter will add the date stamp.

First, second and third MPEG-2 encoders respectively receive first 809, second 811 and third 813 television signals and encode the signals to produce first, second and third elementary bit streams 815, 817 and 819. The first 818, second 820 and third 822 packetisers respectively receive first 815, second 817 and third 819 elementary bit streams and packetise the elementary bit streams to produce first, second and third packetised elementary bit streams (PES) 821, 823 and 825. The packetising of an elementary bit stream includes creating series of packets which contain a packet head and a data portion, but which do not have any fixed length. The first, second and third scramblers respectively receive first, second and third packetised elementary bit streams and produce first, second and third scrambled packetised elementary bit streams. Each of the scramblers scrambles only the data portion of each packetised elementary bit stream it receives and does not scramble the packet header.

The multiplexer 830 receives as inputs packetised sections of tables on line 841 and the first, second and third scrambled PES 827, 829 and 831 and produces a transport stream from one of its inputs on line 801. The packetised sections with tables 841 contain information which allows the set top box 880 to effect source decoding and produce the video signals 839. The information is stored in a tabular form where each table contains a number of sections and each section is transmitted individually.

The multiplexer 830 produces the transport stream 801 such as that illustrated in Figure 1. The transport stream includes a number of transport packets with each transport packet containing a transport header 4 and a transport packet payload 6. Transport packets have a fixed length. In the MPEG-2 digital video broadcast (DVB) standard the transport packet is 188 bytes in length. Transport packets are shorter in length than the packets in the packetised elementary stream. Consequently a packet from the first scrambled PES 827 will be spread over a number of transport packets and these transport packets will be multiplexed with the transport packets derived from the packetised sections in tables 841 and the second and third scrambled PES 829, 831. The transport stream is then supplied on line 801 to the channel encoder 840 to produce the modulated analogue signal for transmission on the channel 852.

The channel encoder 840 includes a circuitry 832 for forward error correcting (FEC) the transport stream on line 801 and a digital to analogue converter for converting the signal from the digital to analogue domain to produce an analogue signal 833. The analogue signal 833 is modulated and up converted to a transmission frequency by the circuitry 834 to produce the modulated analogue signal which is then transmitted into the channel 852.

The operation of the set top box 880 will now be described. The set top box 880 includes a channel decoder 860 and a source decoder 870. The channel decoder 860 receives a modulated analogue signal on the channel 852 and produces the transport stream 1 which it supplies to the source decoder 870. The channel decoder 860 includes circuitry 862 for tuning to the modulated analogue signal on the channel 852 and for down converting and demodulating the modulated analogue signal on the channel 852 to produce an analogue signal 837. The analogue signal 837 is converted from analogue to digital in an analogue to digital converter and forward error corrected by the circuitry 864 to reproduce the transport stream 1.

The source decoder 870 receives the transport stream 1 and produces the video signal 839. The source decoder 870 includes the programmable transport interface 10 and MPEG-2 decoder 872. The PTI 10 demultiplexes the transport stream 1, selects the transport packets 2 carrying information relating to a particular television program, and descrambles the selected transport packet to produce a data output stream 880, which is in fact the packetised elementary bit stream associated with the selected television program. The MPEG-2 decoder 872 receives the data output stream 880 and produces the video signal 839 which is supplied to the television 890. The television 890 displays the selected program.

Whilst the preferred embodiments of the present invention have been concerned with validating a time stamp, embodiments of the present invention can be used to check any other type of information. In preferred embodiments of the present invention, the data stream has been described as being an MPEG data stream. It should be appreciated that in alternative embodiments of the present invention the data stream can take any suitable form In the preferred embodiments of the present invention, it is checked whether the time stamp or the like falls in a given range. In alternative embodiments of the present invention, the time stamp or the like may be checked to see only if its value is above or below a given value in order to determine if it is valid. Likewise in alternative embodiments of the present invention it may be checked that the time stop or the like only equals a given value in order to determine if it is valid.

## Claims

1. A method of determining the validity of information contained in a data stream, said information falling within a predetermined range when valid, said method comprises the steps of:
selecting a first part of said of said information, said first part being more significant than a remainder of said information;
comparing said first part with one or more corresponding parts of one or more values defining said predetermined range; and
determining from said comparing step if said information is or could be within said predetermined range.

2. A method as claimed in claim 1, comprising the following further steps if is determined that the information could be within said range;
a further selecting step in which a further part of said information is selected which contains the next most significant information;
a further comparing step in which said further part is compared with corresponding parts of said one or more values defining said predetermined range; and
a further determining step in which it is determined if said information is or could be within said predetermined range.

3. A method as claimed in claim 2, wherein said further steps are performed until it is determined if the information is or is not within said predetermined range

4. A method as claimed in claim 1, 2 or 3, wherein said parts of said information comprises a byte.

5. A method as claimed in any one of the preceding claims, wherein the results of said determining step comprises one or the following three conditions:
information could be in range; information is within range; and information is not within range.

6. A method as claimed in any preceding claim, wherein said information comprises a time stamp

7. A method as claimed in any preceding claim wherein said range is defined by a maximum value and it is determined that said information is in said range if said information has a value less than said value.

8. A method as claimed in any preceding claim wherein said range is defined by a minimum value and it is determined that said information is in said range if said information has a value greater than said value.

9. A method as claimed in claim 7 and 8, wherein it is determined in parallel if the information has a value less than the maximum value and if the information has a value greater than said minimum value

10. A method as claimed in claim 7, 8 or 9, wherein it is determined if the information is in said range if said information has a value equal to said maximum value or said minimum value.

11. Circuitry for determining the validity of information contained in a data stream, said information falling within a predetermined range when valid, said circuitry comprises:
means for selecting a first part of said of said information, said first part being more significant than a remainder of said information;
means for comparing said first part with one or more corresponding parts of one or more values defining said predetermined range; and
means for determining from said comparing step if said information is or could be within said predetermined range.

12. An integrated circuit comprising circuitry as claimed in claim 11.

13. A set top box comprising circuitry as claimed in claim 11.
